# EUROPÄISCHE PATENTSCHRIFT

(11) **EP 2 366 563 B1**
(45) Veröffentlichungstag und Bekanntmachung des Hinweises auf die Patenterteilung: **25.10.2017**
(21) Anmeldenummer: 11001523.7
(22) Anmeldetag: 24.02.2011
(51) Int. Cl.: B60D 1/06, B60D 1/58

(54) **Anhängekupplung mit einem optischen Sensor**
Trailer coupling with an optical sensor
Attelage doté d'un capteur optique

(30) Priorität: 17.03.2010 DE 102010011741
(43) Veröffentlichungstag der Anmeldung: 21.09.2011
(73) Patentinhaber: WESTFALIA - Automotive GmbH, 33378 Rheda-Wiedenbrück (DE)
(72) Erfinder: Hetfleisch, Raimund, 33129 Delbrück-Boke (DE); Sielhorst, Bernhard, 33378 Rheda-Wiedenbrück (DE)
(74) Vertreter: Patentanwälte Bregenzer und Reule Partnerschaftsgesellschaft mbB

(56) Entgegenhaltungen:
- DE-A1- 19 615 398
- DE-A1-102008 040 866

## Beschreibung

Die Erfindung betrifft eine Anhängekupplung für ein Kraftfahrzeug, insbesondere ein Personen-Kraftfahrzeug, gemäß Oberbegriff des Anspruchs 1 sowie eine Zugkupplung.

Eine derartige Anhängekupplung ist aus DE 10 2008 040 866 A1 bekannt.

Eine weitere Anhängekupplung ist aus US 5,579,228 bekannt. Am fahrzeugfesten Teil, nämlich einem Träger für den einen Kugelkopf umfassenden Kuppelkörper, ist ein Sensor, insbesondere ein optischer Sensor, angeordnet, der eine eine Linieneinteilung aufweisende, mit der Zugkupplung drehfest gekoppelten Scheibe erfasst. Das Sensorsignal des optischen Sensors wird in Richtung des Anhängers für eine Gespannstabilisierung übertragen.

Die bekannte Konfiguration ist allerdings gegenüber Fremdlichteinflüssen extrem empfindlich. Alternativ wird in US 5,579,228 anstelle des optischen Sensors auch ein Potenziometer vorgeschlagen.

Es ist daher die Aufgabe der vorliegenden Erfindung, eine zuverlässige Winkelerfassung zwischen dem Kraftfahrzeug und dem Anhänger bereitzustellen.

Zur Lösung der Aufgabe ist eine Anhängekupplung gemäß der technischen Lehre des Anspruchs 1 vorgesehen.

Im Sinne der Erfindung ist es auch, wenn eine Zugkupplung für einen Anhänger entsprechend ausgestattet ist, was Gegenstand eines weiteren unabhängigen Anspruches ist.

Das erfindungsgemäße optische Messprinzip, das eine aktive Beleuchtung des zu messenden Objektes vorsieht, ist also nicht nur bei der kraftfahrzeugseitigen Anhängekupplung, sondern auch bei der anhängerseitigen Zugkupplung anwendbar. Indem das zu reflektierende Licht, das man auch als Messlicht bezeichnen kann, aktiv von der Sensoranordnung erzeugt wird, können die Eigenschaften des Lichtes beeinflusst werden. So ist es beispielsweise möglich, Licht in bestimmten Lichtfarben bzw. Lichtwellenlängen zu erzeugen, was zur optischen Messung optimal geeignet ist. Die Einflüsse von Umgebungslicht können dadurch wesentlich verringert werden. Des Weiteren umfasst die Erfindung auch, dass das Licht beispielsweise phasenmoduliert, frequenzmoduliert oder dergleichen verändert wird, um ein geeignetes Reflexionslicht für den einen oder mehrere optische Sensoren zur Verfügung zu haben. Beispielsweise kann das von der Lichtquelle erzeugte Licht ein Laserlicht sein oder auch ein Infrarotlicht. Es versteht sich, dass prinzipiell auch eine Lichterzeugung im sichtbaren Bereich zu Messzwecken durch den mindestens einen optischen Sensor geeignet ist. Bevorzugt ist jedoch Licht im nicht sichtbaren Bereich, was die Umwelteinflüsse deutlich verringert.

Bei dem erfindungsgemäßen Konzept ist quasi das auch bei Computermäusen verwendete Messprinzip realisiert, d.h. man erzeugt genau dasjenige Licht, z.B. Infrarotlicht oder Laserlicht, das eine geeignete optische Erfassung durch den mindestens einen optischen Sensor ermöglicht.

Bevorzugt ist eine Lichterzeugung und Messung direkt im Kontaktbereich zwischen der Zugkupplung und der Anhängekupplung. So befindet sich der Licht-Austrittsbereich der mindestens einen Lichtquelle und der Licht-Erfassungsbereich oder der optische Sensor als Ganzes bei dieser Ausführungsform in einem Innenraum der Zugkupplungsaufnahme bzw. sind dort hin gerichtet, jedenfalls wenn die Zugkupplung an der Anhängekupplung montiert ist. Es versteht sich, dass diese Konfiguration auch bei der erfindungsgemäß erfassten Zugkupplung gegeben sein kann.

Der Kuppelkörper ist zweckmäßigerweise relativ zu dem Kuppelkörperträger, beispielsweise einem Kupplungsarm oder einem sonstigen, zum Tragen des Kuppelkörpers geeigneten Bauteil, feststehend. Mithin dreht also der Kuppelkörper in an sich bekannter Weise nicht. Insbesondere bei dieser Ausführungsform ist es zweckmäßig, wenn der Kuppelkörper kugelig ist, was die an sich bekannte gelenkpfannenartige Dreh- und Rollbewegung und Nickbewegung des Anhängers bezüglich des Kraftfahrzeuges ermöglicht.

Der Licht-Austrittsbereich der mindestens einen Lichtquelle und der Licht-Erfassungsbereich des optischen Sensors oder gar der optische Sensor als Ganzes sind dann zweckmäßigerweise an dem Kuppelkörper angeordnet. Sinngemäß gilt für die Zugkupplung, dass der Licht-Austrittsbereich und der Licht-Erfassungsbereich vorzugsweise an der Zugkupplungsaufnahme angeordnet sind, jedenfalls in Richtung des Kuppelkörpers orientiert, wenn dieser in der Zugkupplungsaufnahme aufgenommen ist.

Eine andere Ausführungsform der Erfindung kann aber auch vorsehen, dass der Kuppelkörper relativ zu dem Kuppelkörperträger beweglich ist. Dies ermöglicht ein leichtes Schwenken des Anhängers relativ zum Kraftfahrzeug oder Zugfahrzeug. Es versteht sich, dass ein Bremsen des Kuppelkörpers, insbesondere zur Gespannstabilisierung des Gespannes aus Kraftfahrzeug und Anhänger, zweckmäßig ist. Der Kuppelkörper ist beispielsweise mittels eines Drehlagers und/oder mittels eines Schiebelagers verschieblich bezüglich des Kuppelkörperträgers gelagert. Dann kann ein formschlüssiger Halt der Zugkupplungsaufnahme am Kuppelkörper der Anhängekupplung gewünscht sein, so dass beispielsweise eine polygonale oder eine sonstige, eine Drehfestigkeit ermöglichende Außenkontur des Kuppelkörpers vorgesehen ist. Dieser könnte auch eine Aufnahme aufweisen, in die ein entsprechendes Gegenstück der Zugkupplung des Anhängers einsteckbar ist, vorzugsweise formschlüssig.

Wenn der Kuppelkörper relativ zum Kuppelkörperträger beweglich ist, ist es vorteilhaft, wenn der Licht-Austrittsbereich der Lichtquelle und der optische Sensor als Ganzes, zumindest aber dessen Licht-Erfassungsbereich an einem Lagerteil angeordnet sind, das den Kuppelkörper bezüglich des Kuppelkörperträgers lagert. Das Lagerteil kann beispielsweise eine Art Lagerstift sein, dessen Stirnseite in Richtung der Zugkupplungsaufnahme freisteht, so dass dort ein optimaler Anbringungsort für den optischen Sensor und/oder die Lichtquelle gegeben ist. Jedenfalls ist dann an dieser Stirnseite der Licht-Austrittsbereich und der Licht-Erfassungsbereich vorgesehen. Der Kuppelkörper, der beispielsweise kugelmantelartig ist, kann bezüglich des Lagerteils, z.B. des vorgenannten Stiftes, axial verschieblich, insbesondere jedoch drehbeweglich sein. Es versteht sich, dass Lager, insbesondere Wälzlager und Gleitlager, hier vorteilhaft sind.

Zum Lenken und Übertragen des Lichtes können weitere Maßnahmen vorteilhaft sein, nämlich dass beispielsweise zwischen der Lichtquelle und dem Licht-Austrittsbereich ein Lichtleiter, z.B. eine Glasfaser, angeordnet ist. In diesem Sinne ist es auch, wenn zwischen dem Licht-Erfassungsbereich und dem optischen Sensor ein Lichtleiter vorgesehen ist. Somit ist es beispielsweise möglich, die Lichtquelle und/oder den Sensor abseits eines mechanisch beanspruchten Ortes, z.B. abseits des Kuppelkörpers, an der Anhängekupplung anzuordnen und die Verbindung zum Licht-Austrittsbereich und Licht-Erfassungsbereich über Lichtleiter zu realisieren.

Selbstverständlich können auch weitere lichtlenkende, z.B. bündelnde, Mittel vorgesehen sein. So sieht eine Variante der Erfindung beispielsweise vor, dass der Lichtquelle eine Linse vorgelagert ist, die das Licht der Lichtquelle bündelt oder streut. Umgekehrt kann auch beim optischen Sensor eine Linse vorteilhaft sein, die das auf den Sensor auftreffende Licht bündelt oder streut.

Der Sensor und die Lichtquelle können jedoch auch unmittelbar an einem Kontaktbereich der Zugkupplung mit dem Kuppelkörperträger angeordnet sein, beispielsweise unmittelbar in der Zugkupplungsaufnahme oder am Kuppelkörper. Weiterhin ist es möglich, beispielsweise die Lichtquelle an diesem Kontaktbereich anzuordnen, während die optische Verbindung zum Sensor über Lichtleiter realisiert ist oder auch umgekehrt.

Erfindungsgemäß sind Schutzmaßnahmen für den Sensor und die Lichtquelle, so z.B. eine Abdeckung, vorgesehen, die den Sensor oder die Lichtquelle vor Umwelteinflüssen schützt. Man kann sich beispielsweise ein Vergießen des Sensors oder der Lichtquelle vorstellen. Weiterhin ist es denkbar, dass die Abdeckung unmittelbar auch eine lichtleitende oder lenkende Funktion hat, beispielsweise als Linse ausgestaltet ist.

An dieser Stelle sei noch bemerkt, dass der Sensor und die Lichtquelle vorteilhaft zu einem Modul zusammengefasst sein können, das als Ganzes in oder an der Anhängekupplung montiert wird. So kann man sich beispielsweise ein solches Modul vorstellen, dass direkt in die Kugeloberfläche eines Kuppelkörpers eingesetzt ist. Dabei macht man sich zu Nutze, dass solche Baueinheiten sehr klein sein können, so dass die Trag- und Wirkoberfläche des Kuppelkörpers durch die Sensoranordnung bzw. das Modul aus Sensor und/oder Lichtquelle kaum verkleinert ist.

Zur Kompensation von Fehlern oder Fremdlichteinflüssen sind weitere Maßnahmen vorteilhaft, so z.B. dass zwei oder mehr Lichtquellen vorhanden sind, deren Licht eine unterschiedliche Qualität aufweist. So sieht eine bevorzugte Ausführungsform vor, dass zwei Lichtquellen mit Licht gleicher Wellenlänge, jedoch einem Phasenversatz von zweckmäßigerweise 180° vorgesehen sind.

Die Lichtquelle umfasst zweckmäßigerweise eine Laserlichtquelle und/oder eine Infrarotlichtquelle. Der optische Sensor ist dafür jeweils sensibel, d.h. er umfasst beispielsweise eine für das jeweilige Licht empfindliche Fotodiode.

Die Signalmittel sind zweckmäßigerweise zur Berechnung von Koordinatendaten, beispielsweise Winkel-Koordinaten, anhand von Geschwindigkeitsdaten des mindestens einen optischen Sensors ausgestaltet. So umfassen die Signalmittel beispielsweise einen digitalen Signalprozessor, der Bildinformationen des optischen Sensors oder Helligkeitsinformationen des optischen Sensors in Geschwindigkeiten umrechnet, um diese wiederum dann in Bewegungsdaten und/oder Koordinatendaten umzuwandeln. Diese bilden dann das Winkelsignal.

Es versteht sich, dass die Sensoranordnung mehrere Sensoren und mehrere Lichtquellen umfassen kann. Beispielsweise kann bei einer erfindungsgemäßen Anhängekupplung vorgesehen sein, dass jeweils ein Paar aus optischem Sensor und Lichtquelle an verschiedenen Winkelpositionen bezüglich des Kuppelkörpers, insbesondere der Kupplungskugel, angeordnet ist.

Weiterhin eignet sich die erfindungsgemäße Sensoranordnung zweckmäßigerweise zu einer Abstandsmessung, d.h. zu einer Messung eines Abstandes zwischen der Anhängekupplung und der Zugkupplung, z.B. eines Abstandes zwischen Zugkupplungsaufnahme und Kuppelkörper. So kann beispielsweise festgestellt werden, ob die Zugkupplung an der Anhängekupplung montiert ist und/oder ob ein Haltebacken der Zugkupplung in Richtung des Kuppelkörpers bewegt ist, die Zugkupplung also - allgemeiner formuliert - richtig verriegelt ist.

Es versteht sich, dass anhand der erfindungsgemäßen Vorgehensweise verschiedene Winkelsignale gemessen werden können, so z.B. Winkel um eine im Wesentlichen vertikale Achse der Anhängekupplung beim Fahrbetrieb oder auch um eine beim Fahrbetrieb im Wesentlichen horizontale Achse (Rollwinkel und/oder Nickwinkel).

Weiterhin ist es vorteilhaft, wenn die Anhängekupplung eine Busschnittstelle oder eine sonstige elektrische Schnittstelle zur Ankopplung an das Bordnetz des Kraftfahrzeugs zur Übertragung des Winkelsignals aufweist. Die Busschnittstelle ist beispielsweise eine CAN-Schnittstelle (Controller Area Network), eine LIN-Schnittstelle (Local Interconnect Network) oder dergleichen.

An dieser Stelle sei bemerkt, dass der Kuppelkörperträger fest am Kraftfahrzeug montiert sein kann oder auch an einem Lager lösbar montierbar, insbesondere ansteckbar, oder beweglich gelagert, so dass z.B. der Kuppelkörperträger zwischen einer Gebrauchsstellung und einer Nichtgebrauchsstellung verstellbar gelagert ist. In der Nichtgebrauchsstellung ist der Kuppelkörperträger bzw. auch der Kuppelkörper beispielsweise unter einer Heckschürze oder einem Heck-Stoßfänger des Kraftfahrzeuges verborgen, jedenfalls gegenüber Sicht im Wesentlichen abgedeckt, so dass eine optisch ansprechende Gestaltung getroffen ist. In der Betriebsstellung hingegen steht der Kuppelkörper nach hinten vor das Kraftfahrzeug vor, beispielsweise nach hinten vor einen Stoßfänger, so dass der Anhänger angehängt werden kann.

Nachfolgend werden Ausführungsbeispiele der Erfindung anhand der Zeichnung erläutert. Es zeigen:
- Figur 1: eine schematische, teilweise geschnittene Seitenansicht einer Anhängekupplung, an die eine Zugkupplung angekoppelt ist,
- Figur 2: die Anhängekupplung gemäß Figur 1 vergrößert,
- Figur 3: einen Ausschnitt A der Anhängekupplung gemäß Figuren 1, 2 und
- Figur 4: eine Draufsicht auf einen in Figur 3 im Querschnitt dargestellten Kuppelkörper der Anhängekupplung gemäß Figuren 1 und 2.

Eine Anhängekupplung 10 ist an einem Kraftfahrzeug 12 befestigt, beispielsweise einem Querträger. An einem Kuppelkörperträger 13 der Anhängekupplung 10 sind hierfür beispielsweise Bohrungen 24 vorgesehen, wobei eine bewegliche Lagerung, insbesondere eine Dreh- und/oder Schiebelagerung, des Kuppelkörperträgers 13 bezüglich des Kraftfahrzeugs 12 auch möglich sind, z.B. anhand einer geeigneten Lagereinrichtung 14. Der Kuppelkörperträger 13 steht nach hinten vor einen Stoßfänger 11 des Kraftfahrzeuges 12 vor. Der Kuppelkörperträger 13 trägt an seinem freien Ende einen Kuppelkörper 15, der vorliegend eine kugelige Gestalt hat. Dementsprechend kann eine Zugkupplung 16 eines Anhängers 17 mit ihrer Zugkupplungsaufnahme 18 auf den kugeligen Kuppelkörper 15 aufgesetzt werden.

Die Zugkupplung 16 ist an einem freien Ende einer Deichsel 19 des Anhängers 17 angeordnet und mittels eines Schwenkhebels 20 betätigbar. Wenn der Schwenkhebel 20 in die Schließstellung, das heißt in Richtung der Deichsel 19 bewegt wird, betätigt er in an sich bekannter Weise einen Haltebacken 21 in Richtung einer Kugeloberfläche 23 des Kuppelkörpers 15. Somit liegt also eine Innenfläche 22 der Zugkupplungsaufnahme 18 an der Kugeloberfläche 23 an. Der Kuppelkörper 15 ist zweckmäßigerweise feststehend bezüglich des Kuppelkörperträgers 13, zumindest drehfest, so dass die Zugkupplungsaufnahme 18 an der Kugeloberfläche 23 in bekannter Weise außenseitig entlang gleitet.

Die vorliegende Ausgestaltung des Kuppelkörpers 15 als Kupplungskugel, die bevorzugt ist, ermöglicht die Ankupplung einer üblichen, normgerechten Zugkugelkupplung an die erfindungsgemäße Anhängekupplung 10, vorliegend also der Zugkupplung 16. Diese ist dementsprechend eine Zugkugelkupplung.

Zur Erfassung von Winkelstellungen des Anhängers 17 bezüglich des Kraftfahrzeuges 12 oder Zugfahrzeuges ist eine Sensoranordnung 30 vorgesehen, die einen optischen Sensor 31 zur Erfassung von Licht aufweist, das von einer Lichtquelle 32 erzeugt wird. Die Lichtquelle 32 ist beispielsweise ein Infrarot-Lichtquelle. Hierfür umfasst die Lichtquelle 32 beispielsweise eine Infrator-LED 33. Der Sensor 31 ist dazu passend ausgestaltet, d.h. er ist im Infrarotbereich empfindlich. Es versteht sich, dass auch andere Sensoren oder Lichtquellen möglich sind, so z.B. Laserlichtquellen und hierfür geeignete Sensoren, was die Auflösung der gegenüberliegenden Struktur, hier der Zugkupplungsaufnahme 18, verbessert.

Der Sensor 31 und die Lichtquelle 32 sind unmittelbar nebeneinander am Kuppelkörper 15 angeordnet, beispielsweise in einer Aufnahme 35. Zweckmäßigerweise bilden der Sensor 31 und die Lichtquelle 32 eine Baueinheit, sozusagen ein Sensormodul 34, das als Ganzes in die Aufnahme 35 einsetzbar ist.

Durch die unmittelbar benachbarte und nebeneinanderliegende Anordnung des Sensors 31 und der Lichtquelle 32 entsprechen sich ein Licht-Austrittsbereich 36 der Lichtquelle 32 und ein Licht-Erfassungsbereich 37 des Sensors 31 quasi unmittelbar, liegen jedenfalls eng beieinander. Es ist auch möglich, dass z.B. ein Licht-Austrittsbereich größer als ein Licht-Erfassungsbereich eines Sensors einer erfindungsgemäßen Kupplung ist und/oder dass der Licht-Austrittsbereich und der Licht-Erfassungsbereich einen Versatz aufweisen.

Das von der Lichtquelle 32 erzeugte Licht wird von der Innenfläche 22 in der Zugkupplungsaufnahme 18 reflektiert, so dass es als Licht 39 in den Licht-Erfassungsbereich 37 des Sensors 31 gelangt. Dieser erzeugt anhand des Lichts 39 ein Messsignal 40, das seinerseits wiederum von Signalmitteln 41 der Sensoranordnung 30 zur Erzeugung eines Winkelsignals 42 genutzt wird. Die Signalmittel 41 umfassen beispielsweise einen digitalen Signalprozessor.

Weiterhin umfasst die Sensoranordnung 30 eine Bus-Schnittstelle 43 zur Ankopplung an einem fahrzeugseitigen Bus des Kraftfahrzeuges 12, z.B. einen CAN-Bus.

In einer bevorzugten Ausführungsform der Erfindung arbeitet das Sensormodul 34 ähnlich wie eine Computermaus, bei der eine ausreichende Auflösung gewährleistet ist.

Die Leitungsführung und Anordnung der elektrischen Komponenten der Sensoranordnung 30 kann in einem Innenraum des Kuppelkörperträgers 13 oder des Kuppelkörpers 15 erfolgen. So verläuft beispielsweise ein Leitungskanal 44 vom Sensormodul 34 weg nach unten, durch einen hochstehenden Abschnitt des Kuppelkörperträgers 13 hindurch bis zur Auswerteelektronik, nämlich den Signalmitteln 41 und der Bus-Schnittstelle 43. Es versteht sich, dass insbesondere in einem Bereich unterhalb des Kuppelkörpers 15 auch eine Leitungsführung in einem Außenbereich der Anhängekupplung 10 möglich ist, beispielsweise in einer am Außenumfang des Kuppelkörperträgers 13 vorgesehenen Nut. Weiterhin kann im Sinne einer leichten Auswechselbarkeit, z.B. im Reparaturfall, sinnvoll vorgesehen sein, dass die Signalmittel und/oder die Bus-Schnittstelle 43 in einem Gehäuse 45, z.B. einem Kapselgehäuse angeordnet sind, so dass sie vor Umwelteinflüssen geschützt sind. Das Gehäuse 45 ist zweckmäßigerweise in einer verschließbaren Aufnahme der Anhängekupplung 10 angeordnet, beispielsweise einer mit einem nicht dargestellten Deckel verschließbaren Aufnahme an einer Unterseite des Kuppelkörperträgers.

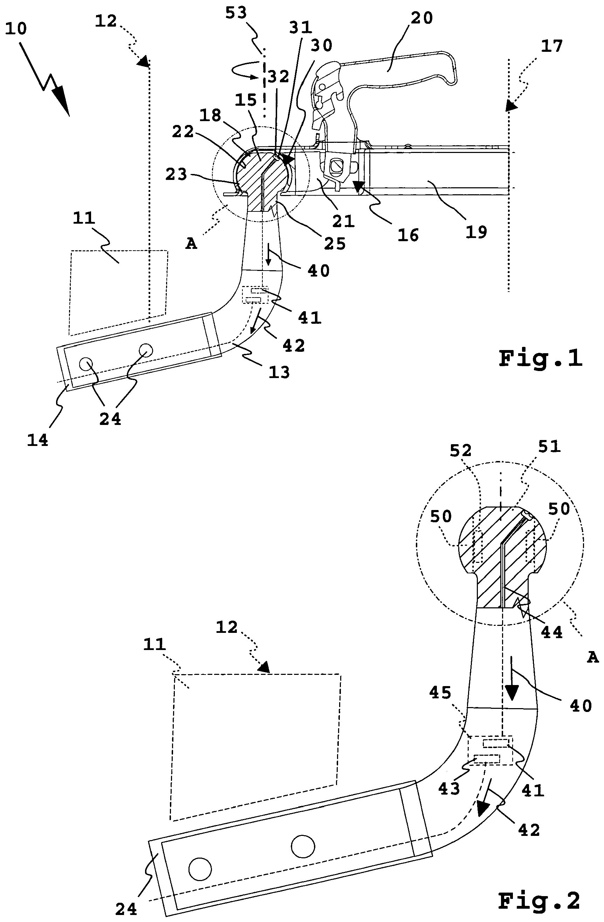

Es versteht sich, dass die erfindungsgemäße optische Sensoranordnung nicht nur bei Anhängekupplungen verwendbar ist, deren Kuppelkörper am Kuppelkörperträger feststehend ist, sondern auch bei solchen, bei denen der Kuppelkörper beweglich am Kuppelkörperträger oder am Kupplungsarm gelagert ist. Schematisch ist eine solche Anordnung in Figur 2 eingezeichnet. Ein Kuppelkörpermantel 50 ist dabei an einem Lagerteil 51 beweglich gelagert, vorliegend drehgelagert. Zwischen dem Kuppelkörpermantel 50, der insoweit also den Kuppelkörper darstellt, und dem Lagerteil 51 ist zweckmäßigerweise ein Wälzlager, beispielsweise ein Rollen- oder Kugellager vorgesehen. Aufgrund des Lagers 52 kann der Kuppelkörpermantel 50 um das Lagerteil 51, mithin also eine Drehachse 53, drehen. Das Sensormodul 34 ist am drehfesten Lagerteil 51 angeordnet.

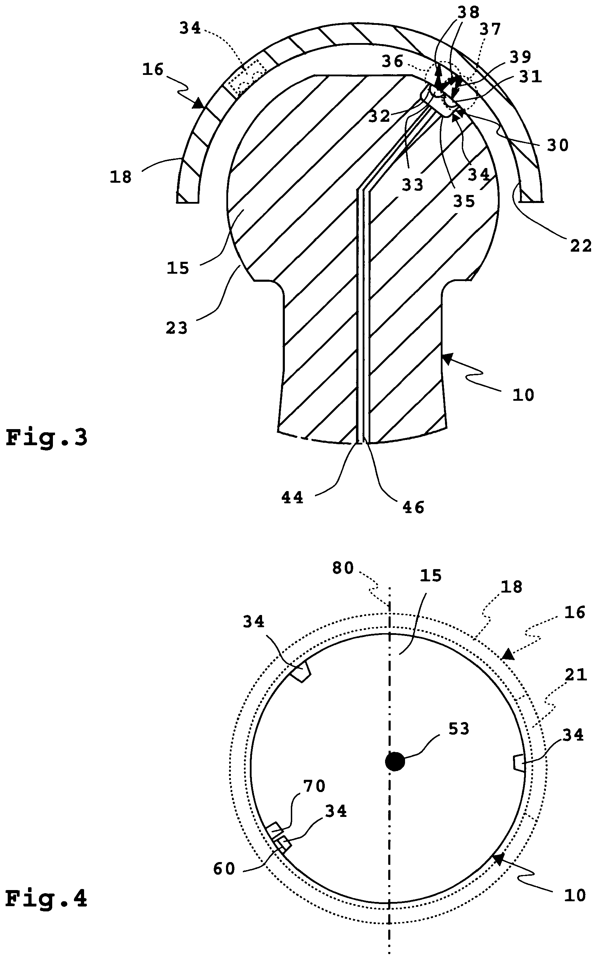

Zwar ist es mit bereits einem erfindungsgemäß positionierten optischen Sensor und einer zugehörigen Lichtquelle möglich, ein hinreichend genaues Winkelsignal zu erzeugen. Werden jedoch mehrere Winkel erfasst und/oder ist eine höhere Messgenauigkeit gewünscht, können auch weitere Sensoren vorgesehen sein, was in Figur 4 angedeutet ist. Insgesamt sind drei Sensormodule 34 vorgesehen, die jeweils eine Lichtquelle 32 und einen Sensor 31 enthalten (nicht einzeln dargestellt). Eines der Sensormodule 34 ist beispielsweise dem Haltebacken 21 der Zugkupplung 16 zugeordnet, während die beiden anderen Sensormodule 34 an dazu etwa entgegengesetzten Seiten, jedoch in einem Winkelabstand zueinander angeordnet sind. Beispielsweise sind die Sensormodule 34 in Winkeln von etwa 120° zueinander beabstandet.

Vorzugsweise sind erfindungsgemäße Sensoren und die zugeordneten Lichtquellen oberhalb einer äquatorialen Linie eines Kuppelkörpers, der als Kugel ausgestaltet ist, angeordnet, so dass jederzeit bei den entsprechenden Dreh- und Rollbewegungen des Anhängers bezüglich des Zugfahrzeuges eine Fläche der zugeordneten Zugkupplungsaufnahme dem Sensor gegenüberliegt.

Es versteht sich, dass anstelle der im Leitungskanal 44 geführten elektrischen Leitung 46 selbstverständlich auch eine optische Leitung, beispielsweise ein Glasfaserkabel oder dergleichen, vorgesehen sein könnte.

Weiterhin können auch Schutzmaßnahmen getroffen sein, so z.B. eine Abdeckung 60, die transparent ist, so dass sie das erzeugte Licht 38 sowie das reflektierte Licht 39 zum in Figur 4 links unten dargestellten Sensormodul 34 durchlässt. Die Abdeckung 60 kann zudem noch als eine Linse ausgestaltet sein, so dass sie Licht bündelt oder streut, je nach Bedarf.

Die Sensoranordnung 30 kann mit Vorteil auch zur Abstandsmessung genutzt werden. Beispielsweise kann ein Abstand zwischen dem Kuppelkörper 15 und der Zugkupplungsaufnahme 18 durch eines der Sensormodule 34 gemessen werden. Vorzugsweise ist eine Verriegelungsprüfung vorgesehen, bei der das dem Haltebacken 21 gegenüberliegende Sensormodul 34 z.B. den Abstand des Haltebackens 21 zum Kuppelkörper 15 erfasst und somit dessen Verriegelungszustand erfasst.

Es versteht sich, dass eine jeweilige Sensoranordnung auch mehrere Lichtquellen aufweisen kann, so z.B. eine zusätzliche, als Kompensationslichtquelle 70 dienende Lichtquelle, die neben einem oder mehreren der Sensoren 31 angeordnet ist. Anders als in der Zeichnung dargestellt, kann selbstverständlich auch die Kompensationslichtquelle 70 einen Bestandteil eines Sensormoduls bilden oder auch separat davon aufgebaut sein.

Die Sensormodule 34 erfassen beispielsweise Winkelstellungen des Anhängers 17 bezüglich des Kraftfahrzeuges 12, die um eine Hochachse verlaufen, etwa entsprechend beispielsweise der Drehachse 53. Es versteht sich, dass durch die Sensoranordnung 30 auch andere Winkel erfassbar sind, so z.B. sogenannte Nickwinkel und/oder Rollwinkel, d.h. Winkel um eine beim Fahrbetrieb des Gespanns aus Kraftfahrzeug 12 und Anhänger 17 im Wesentlichen horizontale Achse 80.

Weiterhin ist in Figur 3 exemplarisch dargestellt, dass selbstverständlich auch am Anhänger 17 bzw. dessen Zugkupplung 16 in erfindungsgemäßer Weise mit einer aktiven Lichtquelle und einem zugeordneten optischen Sensor gemessen werden könnte. So ist exemplarisch ein Sensormodul 34 in der Zugkupplungsaufnahme 18 angeordnet. Das von dem Sensormodul 34 erzeugte Licht wird von der Kugeloberfläche 23 des Kuppelkörpers 15 reflektiert und vom Sensor 31 des Sensormoduls 34 erfasst. Eine Übertragung des Winkelsignals (nicht dargestellt) könnte beispielsweise über Funk zum Zugfahrzeug bzw. Kraftfahrzeug 12 erfolgen.

## Patentansprüche

1. Anhängekupplung für ein Kraftfahrzeug (12), insbesondere ein Personen-Kraftfahrzeug (12), zum Anhängen eines Anhängers an das Kraftfahrzeug (12), mit einem insbesondere außenseitig kugelförmigen Kuppelkörper (15), auf den eine Zugkupplungsaufnahme (18) einer Zugkupplung (16) des Anhängers aufsetzbar ist, wobei der Kuppelkörper (15) an einem freien Ende eines an dem Kraftfahrzeug (12) befestigbaren Kuppelkörperträgers (13) angeordnet ist, und wobei die Anhängekupplung (10) eine Sensoranordnung (30) mit mindestens einem optischen Sensor (31) zur Erfassung einer Winkelstellung der Zugkupplung (16) relativ zu dem Kuppelkörperträger (13) aufweist, wobei die Sensoranordnung (30) mindestens eine Lichtquelle (32) mit einem zur Zugkupplung (16) gerichteten Licht-Austrittsbereich (36) zur Erzeugung von durch die Zugkupplung (16) reflektierbarem Licht (38) aufweist, dass ein Licht-Erfassungsbereich (37) des mindestens einen optischen Sensors (31) zur Erfassung des reflektierten Lichts (39) ausgerichtet ist, und dass die Sensoranordnung (30) Signalmittel (41) zur Erzeugung eines eine Winkelstellung der Zugkupplung (16) relativ zu dem Kuppelkörperträger (13) anzeigenden Winkelsignals (42) anhand eines Messsignals (40) aufweist, das von dem mindestens einen optischen Sensor (31) anhand von durch die Zugkupplung (16) reflektiertem Licht (39) erzeugbar ist, **dadurch gekennzeichnet, dass** der mindestens eine Sensor (31) und/oder die mindestens eine Lichtquelle (32) durch eine Abdeckung (60) vor Umwelteinflüssen, insbesondere gegenüber mechanischer Beschädigung, geschützt sind.

2. Anhängekupplung nach Anspruch 1, **dadurch gekennzeichnet, dass** der Licht-Austrittsbereich (36) der mindestens einen Lichtquelle (32) und der mindestens eine optische Sensor (31) und/oder dessen Licht-Erfassungsbereich (37) in einen Innenraum der Zugkupplungsaufnahme (18) gerichtet sind, wenn die Zugkupplung (16) an der Anhängekupplung (10) montiert ist.

3. Anhängekupplung nach Anspruch 1 oder 2, **dadurch gekennzeichnet, dass** der Kuppelkörper (15) relativ zum Kuppelkörperträger (13) feststehend ist, und dass der Licht-Austrittsbereich (36) der mindestens einen Lichtquelle (32) und der mindestens eine optische Sensor (31) und/oder dessen Licht-Erfassungsbereich (37) an dem Kuppelkörper (15) angeordnet sind.

4. Anhängekupplung nach Anspruch 1 oder 2, **dadurch gekennzeichnet, dass** der Kuppelkörper (15) relativ zu dem Kuppelkörperträger (13) beweglich ist.

5. Anhängekupplung nach Anspruch 4, **dadurch gekennzeichnet, dass** der Licht-Austrittsbereich (36) der mindestens einen Lichtquelle (32) und der mindestens eine optische Sensor (31) und/oder dessen Licht-Erfassungsbereich (37) an einem den Kuppelkörper (15) am Kuppelkörperträger (13) lagernden Lagerteil (51) angeordnet sind.

6. Anhängekupplung nach einem der vorhergehenden Ansprüche, **dadurch gekennzeichnet, dass** zwischen der mindestens einen Lichtquelle (32) und dem Licht-Austrittsbereich (36) und/oder zwischen dem mindestens einen optischen Sensor (31) und seinem Licht-Erfassungsbereich (37) ein Lichtleiter und/oder eine Linse angeordnet ist.

7. Anhängekupplung nach einem der vorhergehenden Ansprüche, **dadurch gekennzeichnet, dass** der mindestens eine Sensor (31) und/oder die mindestens eine Lichtquelle (32) unmittelbar an einem Kontaktbereich der Zugkupplung (16) mit dem Kuppelkörperträger (15) angeordnet sind.

8. Anhängekupplung nach einem der vorhergehenden Ansprüche, **dadurch gekennzeichnet, dass** der mindestens eine Sensor (31) und/oder die mindestens eine Lichtquelle (32) durch Verguss vor Umwelteinflüssen, insbesondere gegenüber mechanischer Beschädigung, geschützt sind.

9. Anhängekupplung nach einem der vorhergehenden Ansprüche, **dadurch gekennzeichnet, dass** die Sensoranordnung (30) zu einer Kompensation von Fehlern und/oder Fremdlichteinfluss mindestens zwei einem Sensor (31) zugeordnete Lichtquellen (32, 70) aufweist, deren Licht eine unterschiedliche Qualität, insbesondere unterschiedliche Wellenlängen und/oder einen Phasenversatz, aufweist.

10. Anhängekupplung nach einem der vorhergehenden Ansprüche, **dadurch gekennzeichnet, dass** die mindestens eine Lichtquelle (32) eine Laserlichtquelle und/oder eine Infrarotlichtquelle umfasst, wobei der mindestens eine optische Sensor (31) auf das jeweilige Licht (39) sensibel ist.

11. Anhängekupplung nach einem der vorhergehenden Ansprüche, **dadurch gekennzeichnet, dass** die Signalmittel (41) zur Berechnung von Koordinatendaten, insbesondere Winkel-Koordinatendaten, anhand von Geschwindigkeitsdaten des mindestens einen optischen Sensors (31) ausgestaltet sind.

12. Anhängekupplung nach einem der vorhergehenden Ansprüche, **dadurch gekennzeichnet, dass** die Sensoranordnung (30) mehrere optische Sensoren (31) und/oder Lichtquellen (32) aufweist.

13. Anhängekupplung nach einem der vorhergehenden Ansprüche, **dadurch gekennzeichnet, dass** die Sensoranordnung (30) zur Messung eines Abstandes zwischen der Anhängekupplung (10) und der Zugkupplung (16), insbesondere eines Abstandes zu deren Zugkupplungsaufnahme (18), und zur Erzeugung eines Abstandssignals ausgestaltet ist.

14. Zugkupplung (16) eines Anhängers zum Anhängen an ein Kraftfahrzeug (12), insbesondere ein Personen-Kraftfahrzeug, mit einer Zugkupplungsaufnahme (18) zum Aufsetzen auf einen insbesondere außenseitig kugelförmigen Kuppelkörper (15) der Anhängekupplung (10), wobei der Kuppelkörper (15) an einem freien Ende eines an dem Kraftfahrzeug (12) befestigbaren Kuppelkörperträgers (13) angeordnet ist, und wobei eine Sensoranordnung (30) mit mindestens einem optischen Sensor (31) zur Erfassung einer Winkelstellung der Zugkupplung (16) relativ zu dem Kuppelkörper (15) vorgesehen ist, wobei die Sensoranordnung (30) mindestens eine Lichtquelle (32) mit einem zur Anhängekupplung (10) gerichteten Licht-Austrittsbereich (36) zur Erzeugung von durch die Anhängekupplung (10) reflektierbarem Licht (38) aufweist, dass ein Licht-Erfassungsbereich (37) des mindestens einen optischen Sensors (31) zur Erfassung des reflektierten Lichts (39) ausgerichtet ist, und dass die Sensoranordnung (30) Signalmittel (41) zur Erzeugung eines eine Winkelstellung der Zugkupplung (16) relativ zu der Anhängekupplung (10) anzeigenden Winkelsignals (42) anhand eines Messsignals (40) aufweist, das von dem mindestens einen optischen Sensor (31) anhand von durch die Anhängekupplung (10) reflektiertem Licht (39) erzeugbar ist, **dadurch gekennzeichnet, dass** der mindestens eine Sensor (31) und/oder die mindestens eine Lichtquelle (32) durch eine Abdeckung (60) vor Umwelteinflüssen, insbesondere gegenüber mechanischer Beschädigung, geschützt sind.

## Claims

1. Trailer coupling for a motor vehicle (12), in particular a car (12), for attaching a trailer to the motor vehicle (12), with a coupling body (15), in particular spherical on the outside, on which may be fitted a towing coupling seating (18) of a towing coupling (16) of the trailer, wherein the coupling body (15) is mounted at a free end of a coupling body support (13) which may be attached to the motor vehicle (12), and wherein the trailer coupling (10) has a sensor array (30) with at least one optical sensor (31) for detecting an angular position of the towing coupling (16) relative to the coupling body support (13), wherein the sensor array (30) has at least one light source (32) with a light exit zone (36) directed towards the towing coupling (16) to generate light (38) which may be reflected by the towing coupling (16), that a light detection zone (37) of the optical sensor or sensors (31) is oriented to detect the reflected light (39), and that the sensor array (30) has signal means (41) for generating an angle signal (42) indicating an angular position of the towing coupling (16) relative to the coupling body support (13), with the aid of a measuring signal (40) which may be generated by the optical sensor or sensors (31) with the aid of light (39) reflected by the towing coupling (16), **characterised in that** the sensor or sensors (31) and/or the light source or sources (32) are protected by a cover (60) from environmental influences, in particular against physical damage.

2. Trailer coupling according to claim 1, **characterised in that** the light exit zone (36) of the light source or sources (32) and of the optical sensor or sensors (31) and/or its or their light detection zone (37) is directed into an interior of the towing coupling seating (18), when the towing coupling (16) is mounted on the trailer coupling (10).

3. Trailer coupling according to claim 1 or 2, **characterised in that** the coupling body (15) is stationary relative to the coupling body support (13), and that the light exit zone (36) of the light source or sources (32) and of the optical sensor or sensors (31) and/or its or their light detection zone (37) is or are located on the coupling body (15).

4. Trailer coupling according to claim 1 or 2, **characterised in that** the coupling body (15) is movable relative to the coupling body support (13).

5. Trailer coupling according to claim 4, **characterised in that** the light exit zone (36) of the light source or sources (32) and of the optical sensor or sensors (31) and/or its or their light detection zone (37) is or are located on a bearing part (51) supporting the coupling body (15) on the coupling body support (13).

6. Trailer coupling according to any of the preceding claims, **characterised in that** an optical fibre and/or a lens are or is located between the light source or sources (32) and the light exit zone (36) and/or between the optical sensor or sensors (31) and its or their light detection zone (37).

7. Trailer coupling according to any of the preceding claims, **characterised in that** the sensor or sensors (31) and/or the light source or sources (32) are or is located directly on a contact zone of the towing coupling (16) and the coupling body (15).

8. Trailer coupling according to any of the preceding claims, **characterised in that** the sensor or sensors (31) and/or the light source or sources (32) are or is protected by encapsulation from environmental influences, in particular against physical damage.

9. Trailer coupling according to any of the preceding claims, **characterised in that** the sensor array (30), to compensate for errors and/or extraneous light influences, has at least two light sources (32, 70) assigned to one sensor (31) and having light of differing quality, in particular different wavelengths and/or a phase difference.

10. Trailer coupling according to any of the preceding claims, **characterised in that** the light source or sources (32) include a laser light source and/or an infrared light source, wherein the optical sensor or sensors (31) is or are sensitive to the light (39) concerned.

11. Trailer coupling according to any of the preceding claims, **characterised in that** the signal means (41) are designed for the calculation of coordinate data, in particular angle coordinate data, with the aid of the speed data of the optical sensor or sensors (31).

12. Trailer coupling according to any of the preceding claims, **characterised in that** the sensor array (30) has several optical sensors (31) and/or light sources (32).

13. Trailer coupling according to any of the preceding claims, **characterised in that** the sensor array (30) is designed to measure a distance between the trailer coupling (10) and the towing coupling (16), in particular a distance to its towing coupling seating (18), and to generate a distance signal.

14. Towing coupling (16) of a trailer for attaching to a motor vehicle (12), in particular a car, with a towing coupling seating (18) for fitting to a coupling body (15), in particular spherical on the outside, of the trailer coupling (10), wherein the coupling body (15) is mounted at a free end of a coupling body support (13) which may be attached to the motor vehicle (12), and wherein a sensor array (30) with at least one optical sensor (31) for detecting an angular position of the towing coupling (16) relative to the coupling body (15) is provided, wherein the sensor array (30) has at least one light source (32) with a light exit zone (36) directed towards the trailer coupling (10) to generate light (38) which may be reflected by the towing coupling (16), that a light detection zone (37) of the optical sensor or sensors (31) is oriented to detect the reflected light (39), and that the sensor array (30) has signal means (41) for generating an angle signal (42) indicating an angular position of the towing coupling (16) relative to the trailer coupling (10), with the aid of a measuring signal (40) which may be generated by the optical sensor or sensors (31) with the aid of light (39) reflected by the trailer coupling (10), **characterised in that** the sensor or sensors (31) and/or the light source or sources (32) are protected by a cover (60) from environmental influences, in particular against physical damage.

## Revendications

1. Dispositif d'attelage pour un véhicule automobile (12), en particulier un véhicule de tourisme (12), servant à atteler un attelage au véhicule automobile (12), comprenant un corps d'attelage (15) en particulier de forme sphérique côté extérieur, sur lequel un logement d'attelage de traction (18) d'un attelage de traction (16) de l'attelage peut être posé, dans lequel le corps d'attelage (15) est disposé au niveau d'une extrémité libre d'un support de corps d'attelage (13) pouvant être fixé au niveau du véhicule automobile (12), et dans lequel le dispositif d'attelage (10) présente un ensemble capteur (30) comprenant au moins un capteur (31) optique servant à détecter une position angulaire de l'attelage de traction (16) par rapport au support de corps d'attelage (13), dans lequel l'ensemble capteur (30) présente au moins une source de lumière (32) pourvue d'une zone de sortie de lumière (36) orientée en direction de l'attelage de traction (16) et servant à produire une lumière (38) pouvant être réfléchie par l'attelage de traction (16), une zone de détection de lumière (37) de l'au moins un capteur (31) optique est orientée afin de détecter la lumière (39) réfléchie, et l'ensemble capteur (30) présente des moyens de signaux (41) servant à produire un signal d'angle (42) indiquant une position angulaire de l'attelage de traction (16) par rapport au support de corps d'attelage (13) à l'aide d'un signal de mesure (40), qui peut être produit par l'au moins un capteur (31) optique à l'aide d'une lumière (39) réfléchie par l'attelage de traction (16), **caractérisé en ce que** l'au moins un capteur (31) et/ou l'au moins une source de lumière (32) sont protégés par un système de recouvrement (60) contre des influences environnementales, en particulier d'un éventuel endommagement mécanique.

2. Dispositif d'attelage selon la revendication 1, **caractérisé en ce que** la zone de sortie de lumière (36) de l'au moins une source de lumière (32) et l'au moins un capteur (31) optique et/ou sa zone de détection de lumière (37) sont dirigés dans un espace intérieur du logement d'attelage de traction (18) quand l'attelage de traction (16) est monté au niveau du dispositif d'attelage (10).

3. Dispositif d'attelage selon la revendication 1 ou 2, **caractérisé en ce que** le corps d'attelage (15) est immobile par rapport au support de corps d'attelage (13), et que la zone de sortie de lumière (36) de l'au moins une source de lumière (32) et l'au moins un capteur (31) optique et/ou sa zone de détection de lumière (37) sont disposés au niveau du corps d'attelage (15).

4. Dispositif d'attelage selon la revendication 1 ou 2, **caractérisé en ce que** le corps d'attelage (15) est mobile par rapport au support de corps d'attelage (13).

5. Dispositif d'attelage selon la revendication 4, **caractérisé en ce que** la zone de sortie de lumière (36) de l'au moins une source de lumière (32) et l'au moins un capteur optique (31) et/ou sa zone de détection de lumière (37) sont disposés au niveau d'une partie de palier (51) logeant le corps d'attelage (15) au niveau du support de corps d'attelage (13).

6. Dispositif d'attelage selon l'une quelconque des revendications précédentes, **caractérisé en ce qu'**un guide de lumière et/ou une lentille sont disposés entre l'au moins une source de lumière (32) et la zone de sortie de lumière (36) et/ou entre l'au moins un capteur (31) optique et sa zone de détection de lumière (37).

7. Dispositif d'attelage selon l'une quelconque des revendications précédentes, **caractérisé en ce que** l'au moins un capteur (31) et/ou l'au moins une source de lumière (32) sont disposés directement au niveau d'une zone de contact de l'attelage de traction (16) avec le support de corps d'attelage (15).

8. Dispositif d'attelage selon l'une quelconque des revendications précédentes, **caractérisé en ce que** l'au moins un capteur (31) et/ou l'au moins une source de lumière (32) sont protégés par scellement des influences environnementales, en particulier d'un éventuel endommagement mécanique.

9. Dispositif d'attelage selon l'une quelconque des revendications précédentes, **caractérisé en ce que** l'ensemble capteur (30) présente, aux fins d'une compensation d'erreurs et/ou d'une incidence liée à une lumière extérieure, au moins deux sources de lumière (32, 70) associées à un capteur (31), dont la lumière présente une qualité différente, en particulier des longueurs d'onde différentes et/ou un décalage de phase.

10. Dispositif d'attelage selon l'une quelconque des revendications précédentes, **caractérisé en ce que** l'au moins une source de lumière (32) comprend une source de lumière laser et/ou une source de lumière infrarouge, dans lequel l'au moins un capteur (31) optique est sensible à la lumière (39) respective.

11. Dispositif d'attelage selon l'une quelconque des revendications précédentes, **caractérisé en ce que** les moyens de signaux (41) sont configurés afin de calculer des données de coordonnées, en particulier des données de coordonnées d'angle, à l'aide de données de vitesse de l'au moins un capteur (31) optique.

12. Dispositif d'attelage selon l'une quelconque des revendications précédentes, **caractérisé en ce que** l'ensemble capteur (30) présente plusieurs capteurs optiques (31) et/ou sources de lumière (32).

13. Dispositif d'attelage selon l'une quelconque des revendications précédentes, **caractérisé en ce que** l'ensemble capteur (30) est configuré afin de mesurer une distance entre le dispositif d'attelage (10) et l'attelage de traction (16), en particulier une distance par rapport à son logement d'attelage de traction (18), et afin de produire un signal de distance.

14. Attelage de traction (16) d'un attelage destiné à être attelé à un véhicule automobile (12), en particulier une voiture de tourisme, comprenant un logement d'attelage de traction (18) destiné à être posé sur un corps d'attelage (15) de forme en particulier sphérique côté extérieur du dispositif d'attelage (10), dans lequel le corps d'attelage (15) est disposé au niveau d'une extrémité libre d'un support de corps d'attelage (13) pouvant être fixé au niveau du véhicule automobile (12), et dans lequel un ensemble capteur (30) est prévu avec au moins un capteur (31) optique servant à détecter une position angulaire de l'attelage de traction (16) par rapport au corps d'attelage (15), dans lequel l'ensemble capteur (30) présente au moins une source de lumière (32) pourvue d'une zone de sortie de lumière (36) dirigée en direction du dispositif d'attelage (10) servant à produire une lumière (38) pouvant être réfléchie par le dispositif d'attelage (10), une zone de détection de lumière (37) de l'au moins un capteur (31) optique est orientée afin de détecter la lumière (39) réfléchie, et l'ensemble capteur (30) présente des moyens de signaux (41) servant à produire un signal d'angle (42) indiquant une position angulaire de l'attelage de traction (16) par rapport au dispositif d'attelage (10) à l'aide d'un signal de mesure (40), qui peut être produit par l'au moins un capteur (31) optique à l'aide d'une lumière (39) réfléchie par le dispositif d'attelage (10), **caractérisé en ce que** l'au moins un capteur (31) et/ou l'au moins une source de lumière (32) sont protégés par un système de recouvrement (60) contre des influences environnementales, en particulier contre tout endommagement mécanique.
